# EUROPÄISCHE PATENTANMELDUNG

(11) **EP 0 572 038 A1**
(43) Veröffentlichungstag der Anmeldung: **01.12.1993**
(21) Anmeldenummer: 93108792.8
(22) Anmeldetag: 01.06.1993
(51) Int. Cl.: F01M 11/04, B60S 5/00, B09B 3/00

(54) **Gerät zum Entsorgen von Kraftstoff**

(30) Priorität: 29.05.1992 DE 9207313 U
(71) Anmelder: Aichinger, Josef, Jun., D-83064 Raubling (DE)
(72) Erfinder: Aichinger, Josef, Jun., D-83064 Raubling (DE)
(74) Vertreter: Grünecker, Kinkeldey, Stockmair & Schwanhäusser Anwaltssozietät

(57) **Zusammenfassung**

Bei einem Gerät zum Entsorgen von Kraftstoff aus dem Tank eines Fahrzeuges von der Fahrzeugunterseite her, bei dem in einem oben offenen Auffangbehälter (9) ein annähernd vertikal zu einer Auf- und Abwärtsbewegung antreibbares Stechwerkzeug (W) vorgesehen ist, das eine in Aufwärtsrichtung weisende Spitze oder Schneide (29) zum Durchstechen des Tankbodens (B) aufweist, ist an dem Stechwerkzeug (W) ein quer zur Aufwärtsrichtung liegender Verformungsteil (P) zum Ausbeulen des die Stichöffnung (32) umgebenden Tankbodens (B) nach unten vorgesehen.

## Beschreibung

Die Erfindungbetrifft ein Gerät gemäß dem Oberbegriff des Patentanspruchs 1.

Ehe ein Unfall- oder Altfahrzeug entsorgt wird, ist es aus Umwelt-Schutzgründen zweckmäßig, zumindest den Inhalt des Kraftstofftankes zu beseitigen und getrennt zu entsorgen. Dabei ist es schwierig, den Tank vollständig leer zu bekommen. Den Tankboden anzubohren ist wegen des dann unkontrolliert ausfließenden Treibstoffes und der Funkengefahr gefährlich. Den Tankboden aufzumeißeln und von unten durchzuschlagen ist ebenfalls gefährlich und wegen des dann sogleich unkontrolliert ausströmenden Treibstoffes unzweckmäßig. Dazu kommt, daß durch das Aufschlagen der Tankboden im Bereich der gebildeten Öffnung nach innen und oben verformt wird, so daß eine Kraftstoff-Restmenge im Tank verbleibt.

Eine aus DE-U-91 14 131 bekannte Betriebsflüssigkeits-Entsorgungsstation mit einem verfahrbaren Gestell weist an einem gelenkigen Ausleger eine Auffangschale mit dem Stechwerkzeug auf, dessen Antriebseinheit unterhalb der Auffangschale vorgesehen ist. Das Steckwerkzeug hat eine pyramidenartige Spitze mit einer Schneide, in der sich zwei pflugscharförmige Ableitflächen treffen. Das Stechwerkzeug wird so weit in den Tankboden gestoßen, daß ein hinter der Spitze liegender breiter Abtropfrand nicht in den Tank eindringt. Die pflugscharförmigen Ableitflächen sollen ein Aufwerfen eines Randes nach oben innen im Tankboden vermeiden und das Wandmaterial nach außen unten abbiegen. Jedoch wird durch die Antriebskraft des Stechwerkzeugs der Tankboden lokal nach innen eingebeult und wird auch beim Abbiegen des Wandmaterials nach außen gleichzeitig erheblicher Druck nach oben ausgeübt, so daß insgesamt die Einstichstelle höher zu liegen kommt, als der umliegende Tankbodenbereich. Das zügige Abfließen des Tankinhaltes ist dadurch erschwert. Besonders nachteilig ist, daß im Tank Flüssigkeitsreste verbleiben können, die erst beim nachfolgenden Bewegen des Fahrzeugs, z.B. beim Zerlegen zwecks Verschrottung oder Entsorgung, auslaufen und die Umwelt verschmutzen.

Aus GB-B-42 96 01 ist ein Gerät zum Anstechen von Ölbehältern bekannt, wobei ein Stechwerkzeug mit einem längsgekehlten Dorn benutzt wird. Der Dorn wird von oben durch den Boden des Ölbehälters gestoßen, so daß das Öl problemlos auslaufen kann.

Ein ähnliches Gerät ist aus US-A-23 22 808 bekannt, wobei das Stechwerkzeug gewollt eine Einbeulung des Behälterbodens nach oben erzeugt.

Aus DE-A-26 03 829 ist ein fahrbarer Behälter mit Rädern und einem Standfuß zum Umfüllen und zeitweiligen Aufbewahren der Tankfüllung von Kraftfahrzeugen bekannt, wobei eine Pumpe vorgesehen ist, mit der die Tankfüllung abgepumpt und wieder zurückgepumpt werden kann.

Der Erfindung liegt die Aufgabe zugrunde, ein Gerät der eingangs genannten Art zu schaffen, mit dem ein Kraftstofftank zügig, umweltfreundlich, ungefährlich und vollständig entleerbar ist.

Die gestellte Aufgabe wird erfindungsgemäß mit den im kennzeichnenden Teil des Patentanspruchs 1 enthaltenen Merkmalen gelöst.

Mit dem antreibbaren Stechwerkzeug wird, unabhängig davon, ob es sich um einen Metall- oder einen Kunststofftank handelt, nicht nur der Tankboden leicht und rasch durchstoßen, sondern durch Zurückziehen des Stechwerkzeugs eine nach unten gerichtete Ausbeulung geformt. Der Durchstich erfolgt ohne Gefahr einer Funkenbildung. Bei der Abwärtsbewegung des Stechwerkzeuges greift der Verformungsteil von innen benachbart zur Einstichöffnung am Tankboden an, so daß der Tankboden nach unten gewölbt und der Rand der Einstichöffnung zumindest im Bereich des Verformungsteils nach unten ausgebogen wird. Der Treibstoff kann somit zügig und vollständig aus dem Tank ablaufen oder auch mit einer Pumpe abgesaugt werden.

Bei der Ausführungsform gemäß Anspruch 2 ist das Gerät leicht zu handhaben und unter die gewünschte Stelle des Tankbodens zu verfahren, wobei es auf seinem Standfuß sicher steht. Der Antrieb im Gehäuse läßt das gesteuerte Durchstechen des Tankbodens und das Ausbeulen nach unten mit wenig Mühe durchführen.

Alternativ ist das aus Anspruch 3 entnehmbare Gerät in die Entsorgungsbühne baulich so integriert, daß sich das Stechwerkzeug an die gewünschte Stelle unter dem Tankboden verstellen läßt. Die Reaktionskraft aus dem Durchstechen und Ausbeulen wird direkt in die Entsorgungsbühne übertragen. Bei Nichtgebrauch läßt sich das Gerät zur Seite stellen.

Besonders zweckmäßig ist ferner die Ausführungsform gemäß Anspruch 4, weil der Faltenbalg oder das Mundstück sich an die unebene Kontur des Tankbodens anpaßt und verhindert, daß Treibstoff seitlich austritt. Es wird auch beim Durchstechen und Ausbeulen des Tankbodens abfallender Schmutz aufgefangen. Zweckmäßig ist die Ableitung als durchsichtiger Schlauch ausgebildet oder zumindest mit einem durchsichtigen Abschnitt versehen, so daß der ablaufende Treibstoff optisch kontrolliert werden kann.

Die Ausführungsform gemäß Anspruch 5 ist zweckmäßig, weil dank der Form des Stechwerkzeuges relativ geringer Kraftaufwand zum Durchstechen des Tankbodens ausreicht, eine große und das zügige Ablaufen des Treibstoffes begünstigende Öffnung gebildet wird und der Widerhaken eine deutlich nach unten verformte Beule im Tankboden zu formen vermag, selbst in einem Kunststofftank, die das vollständige Auslaufen des Treibstoffes sicherstellt. Zweckmäßigerweise ist das Stechwerkzeug mit wenigstens einer von der Spitze zum Widerhaken verlaufenden Schneide ausgebildet, damit auch dicke Tankböden problemlos perforierbar sind. Das Stechwerkzeug ist vorteilhafterweise aus Stahl oder Hartmetall ausgebildet und läßt sich einfach nachschleifen oder austauschen.

Bei der Ausführungsform gemäß Anspruch 6 gibt der Auffangbehälter beim Durchstechen des Tankbodens nach, wobei er stets in Anlage am Tankboden bleibt und den austretenden Treibstoff auffängt. Beim Zurückziehen des Stechwerkzeuges bleibt der Auffangbehälter dank der Feder in Anlage am Tankboden. Es ist nur ein Arbeitszylinder für das Durchstechen und Ausbeulen erforderlich.

Bei einer alternativen Ausführungsform gemäß Anspruch 7 bewegt sich der Auffangbehälter zusammen mit dem Stechwerkzeug. Der Faltenbalg bzw. das verschiebbare Mundstück nehmen die Relativbewegung zwischen dem Tankboden und dem Stechwerkzeug auf.

Eine weitere, vorteilhafte Ausführungsform geht aus Anspruch 8 hervor. Mit der Höhenverstellvorrichtung läßt sich das Stechwerkzeug an die jeweilige Arbeitshöhe anpassen bzw. von unten an den Tankboden heranfahren. Gegebenenfalls wird die Höhenverstellvorrichtung auch für das Durchstechen und Ausbeulen benutzt; dann ist ein eigener Arbeitszylinder für diesen Arbeitsvorgang entbehrlich. Zweckmäßigerweise wird die Höhenverstellvorrichtung für das ordnungsgemäße Höhen-Positionieren des Stechwerkzeuges und des Auffangbehälters eingesetzt.

Die Ausführungsform gemäß Anspruch 9 ist baulich einfach und leicht zu handhaben. Der zweite, die Höhenverstellvorrichtung im Gehäuse bildende Arbeitszylinder bringt das Stechwerkzeug und den Auffangbehälter von unten her an den Tankboden, ehe mit dem ersten Arbeitszylinder der Tankboden durchstochen und ausgebeult wird. Das Verbindungsstück sorgt für eine stabile Halterung des Stechwerkzeugs und des oberen Arbeitszylinders.

Die Handhabung des Geräts ist bei der Ausführungsform gemäß Anspruch 10 einfach, weil der Handgriff am Verbindungsstück ergonomisch günstig angeordnet ist und das leichte Einrichten des Geräts auf den gewünschten Punkt des Tankbodens ermöglicht.

Bei der Ausführungsform gemäß Anspruch 11 kann die die Arbeit durchführende Person unmittelbar am Gerät die Steuerventile betätigen und dabei die ordnungsgemäße Funktion und die präzise Steuerung des Stechwerkzeugs optisch überwachen. Am gemeinsamen Versorgungsanschluß wird entweder eine Hydraulik- oder eine Druckluftquelle angeschlossen.

Um eine große Treibstoffmenge zügig entsorgen zu können, ist gemäß Anspruch 12 der Auffangbehälter oder die Ableitung an eine Unterdruckquelle oder eine Pumpe anschließbar, mit der der Treibstoff rasch abgefördert wird.

Anhand der Zeichnung werden Ausführungsformen des Neuerungsgegenstandes erläutert. Es zeigen:
- Fig. 1: eine schematische Perspektivansicht eines erfindungsgemäßen Geräts,
- Fig. 2: eine schematische Teilschnittdarstellung einer fest eingebauten Ausführungsform,
- Fig. 3a - 3c: Detailvarianten des Stechwerkzeugs des Geräts der Fig. 1 und 2, und
- Fig. 4: eine weitere Ausführungsform des Stechwerkzeugs und schematisch den Arbeitsablauf.

Ein Gerät G zum Entsorgen von Kraftstoff aus dem Tank eines Fahrzeugs von der Fahrzeugunterseite her weist ein z.B. vierkantiges Gehäuse 1 mit einer Höhenverstellvorrichtung V in Form eines pneumatischen Arbeitszylinders 2 und einem Standfuß 3 sowie Räder 4 auf. Der Arbeitszylinder 2 ist im Gehäuse verankert. Seine Kolbenstange 5 ragt nach oben und ist an ein als I-Träger-Abschnitt ausgebildeten Verbindungsstück 6 angeschlossen. Verschiebbare Gehäuseteile 17 decken die Kolbenstange 5 nach außen ab. In etwa in Verlängerung der Kolbenstange 5 sitzt auf dem Verbindungsstück 6 ein Antrieb A für ein Stechwerkzeug W. Der Antrieb A ist ein weiterer pneumatischer Arbeitszylinder 7, dessen Kolbenstange 8 über ein nicht dargestelltes Verbindungsstück mit dem als Pfeil- oder Harpunenspitze ausbebildeten Stechwerkzeug W verbunden ist. Auf der Kolbenstange 8 sitzt ferner ein das Stechwerkzeug W umgebender, oben offener Auffangbehälter 9, an dessen Öffnung ein elastischer Faltenbalg 10 oder ein elastisches und verschiebbares Mundstück (nicht dargestellt) angebracht ist. An den Auffangbehälter 9 ist eine Ableitung 11, z.B. ein durchsichtiger Schlauch, angeschlossen, die zu einem Treibstoff-Sammelbehälter S führt.

Am Verbindungsstück 6 ist ein seitlich auskragender Handgriff 12 angebracht, der das Einjustieren, Kippen und Verfahren des Gerätes G vereinfacht. Am Gehäuse 1 ist ein beiden Arbeitszylindern 2 gemeinsamer Versorgungsanschluß 34 vorgesehen. Ferner sind Steuerventile 15 und 16 für beide Arbeitszylinder angeordnet, die über Versorgungsleitungen 14 und 13 mit den Arbeitszylindern 2 und 7 verbunden sind. Das Steuerventil 16 für den Arbeitszylinder 7 könnte auch an diesem direkt angebracht sein. Die Versorgungsleitungen 13 zum Arbeitszylinder 7 können innerhalb des Verbindungsstückes 6 verlegt sein.

Zum Entsorgen des Kraftstoffs aus einem Kraftstofftank wird das Gerät bei zunächst teilweise eingefahrener Kolbenstange 5 und aufgebocktem Fahrzeug unter den Kraftstofftank gefahren und abgestellt. Mittels des Handgriffes 6 wird das Stechwerkzeug W genau unter der gewünschten Einstichstelle des Tankbodens eingerichtet. Dann wird die Kolbenstange 5 ausgefahren, bis der das Stechwerkzeug W nach außen abdeckende Faltenbalg 10 ausreichend fest am Tankboden anliegt. Dann wird die Kolbenstange 8 ausgefahren und der Tankboden durchstochen. Auslaufender Treibstoff wird im Auffangbehälter 9 aufgefangen und über die Ableitung 11 abgeleitet. Danach wird die Kolbenstange 8 wieder um eine vorbestimmte Strecke nach unten gefahren, so daß das Stechwerkzeug den Tankboden nach unten ausbeult und die zunächst nach oben gebogenen Einstichränder nach unten zieht, so daß der Treibstoff vollständig auslaufen kann. Sobald kein Treibstoff mehr ausläuft, wird die Kolbenstange 5 eingefahren und das Gerät G beiseite gefahren.

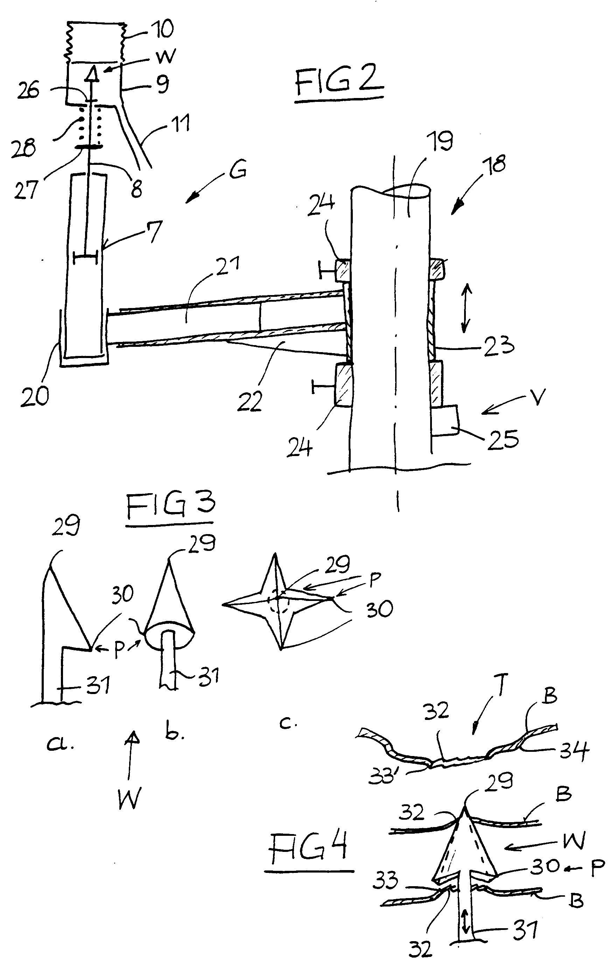

Die Ausführungsform des Gerätes G gemäß Fig. 2 ist fest in eine Entsorgungsbühne 18 eingegliedert, derart, daß sich das Stechwerkzeug unterhalb des auf der Entsorgungsbühne 18 stehenden Fahrzeuges an die gewünschte Stelle quer bewegen läßt. Das Gerät G ist z.B. an einer vertikalen Säule 19 der Entsorgungsbühne 18 schwenkbar und auf- und abverstellbar angebracht. Der Arbeitszylinder 7 sitzt in einem Gehäuse 20, das mit einem Arm 21 in einer Konsole 22 verschiebbar gehalten ist. Die Konsole 22 ist mit einer Buchse 23 an der Säule 19 verdrehbar und auf- und abstellbar abgestützt. Stützringe 24, die verstellbar und festlegbar sind, sichern die vertikale Lage des Geräts G. Gegebenenfalls ist eine Höhenverstellvorrichtung V vorgesehen, die mit einem Antrieb 25 die Konsole 22 entlang der Säule 19 auf- und abverstellen läßt.

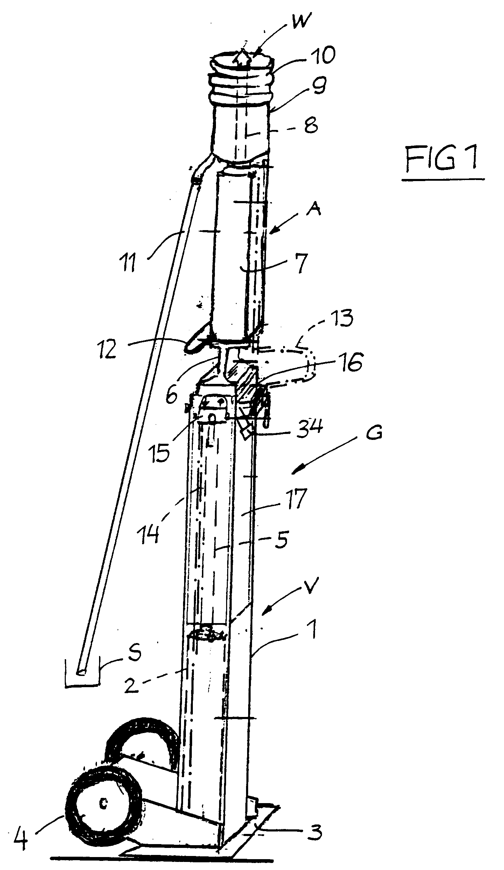

Im Unterschied zur Ausführungsform gemäß Fig. 1 ist der Auffangbehälter 9 auf der Kolbenstange 8 relativ zum Stechwerkzeug W verschiebbar geführt. Ein Anschlag 26 begrenzt seine obere Grenzlage. Eine sich an einem tieferliegenden Anschlag 27 abstützende Feder 28 beaufschlagt den Auffangbehälter 9 nach oben zum Anschlag 26 hin.

Bei der Benutzung des Geräts wird zunächst das Stechwerkzeug W unterhalb der durchzustechenden Stelle des Tankbodens positioniert, zweckmäßigerweise so, daß der Faltenbalg 11 fest am Tankboden anliegt. Dann wird mittels des Arbeitszylinders 7 der Tankboden durchstoßen und durch Zurückziehen des Stechwerkzeuges W nach unten ausgebeult. Dabei verschiebt sich der Auffangbehälter 9 relativ zur Kolbenstange 8 und gegen die Kraft der Feder 28. Beim Zurückziehen des Stechwerkzeuges W bleibt er jedoch in fester Anlage am Tankboden.

Fig. 3 verdeutlicht eine Auswahl verschiedener Möglichkeiten zur Ausbildung des Stechwerkzeuges. In Fig. 3a hat das Stechwerkzeug W die Form einer Harpune mit einer Spitze 29 und einem einseitigen Widerhaken 30, der den Verformungsteil P bildet und in einen Schaft 31 übergeht, der an der Kolbenstange 8 befestigt wird.

Das Stechwerkzeug W gemäß Fig. 3b ist annähernd kegelförmig ausgebildet und weist eine Spitze 29 sowie einen umlaufenden Widerhaken 30 auf.

Das Stechwerkzeug W gemäß Fig. 3c ist in einer Draufsicht auf die Spitze 29 gezeigt. Es hat einen mehrflügeligen Umriß mit mehreren hakenartigen Widerhaken 30 und Schneidkanten.

Das Stechwerkzeug W gemäß Fig. 4 ist als Pfeilspitze mit beidseitigen Widerhaken 30 und einer gemeinsamen Eindringspitze 29 ausgebildet. Beim Durchstechen eines Tankbodens B eines Tanks T wird mit der Spitze 29 zunächst eine Durchstichöffnung 32 gebildet, in deren Nachbarschaft sich der Tankboden B nach oben verformt.

Die Durchstichöffnung 32 wird dann zunehmend vergrößert, bis die Widerhaken 30 durch die Öffnung 32 hindurchtreten, wobei der Tankboden B gegebenenfalls in der Nachbarschaft der Durchstichöffnung nach oben gewölbt ist (bei 33 angedeutet). Danach wird das Stechwerkzeug W wieder zurückgezogen, bis es vom Tankboden B frei kommt. Dabei ziehen die Widerhaken 30 den Tankboden B beulenförmig (bei 34 angedeutet) nach unten. Die zunächst nach oben gebogenen Ränder der Durchstichöffnung werden, wie bei 33' angedeutet, ebenfalls zumindest bereichsweise nach unten ausgebogen. Der Treibstoff im Tank kann ungehindert und restfrei rasch ablaufen.

## Patentansprüche

1. Gerät zum Entsorgen von Kraftstoff aus dem Tank eines Fahrzeuges von der Fahrzeugunterseite her, mit einem in einem oben offenen Auffangbehälter (9) angeordneten, annähernd vertikal zu einer Auf- und Abwärtsbewegung antreibbaren Stechwerkzeug (W), das eine in Aufwärtsrichtung weisende Spitze oder Schneide (29) zum Durchstechen des Tankbodens (B) aufweist, **dadurch gekennzeichnet**, daß das Stechwerkzeug (W) einen quer zur Aufwärtsrichtung liegenden Verformungsteil (P) zum Ausbeulen des die Stichöffnung (32) umgebenden Tankbodens (B) nach unten aufweist.

2. Gerät nach Anspruch 1, **dadurch gekennzeichnet**, daß es ein einen Antrieb (A) für das Stechwerkzeug (W) enthaltendes Gehäuse (1) mit einem Standfuß (3) und Rädern (4) aufweist.

3. Gerät nach Anspruch 1, **dadurch gekennzeichnet**, daß es ein einen Antrieb (A) für das Stechwerkzeug (W) enthaltendes Gehäuse (20) aufweist und in ein Entsorgungsgerüst (18) einer Entsorgungsbühne quer verstellbar eingegliedert ist.

4. Gerät nach Anspruch 1, **dadurch gekennzeichnet**, daß in der Öffnung des Auffangbehälters (9) ein federnder Faltenbalg (10) oder ein federnd bewegliches, vorzugsweise elastisches, Mundstück angeordnet ist.

5. Gerät nach Anspruch 1, **dadurch gekennzeichnet**, daß das Stechwerkzeug (W) nach Art einer Pfeil- oder Harpunenspitze mit einem einseitigen oder mit beidseitigen bzw. umlaufenden oder mehrflügeligen Widerhaken (30) als Verformungsteil (P) und einem Schaft (31) ausgebildet ist.

6. Gerät nach den Ansprüchen 1 bis 5, **dadurch gekennzeichnet**, daß der Auffangbehälter (9) relativ zum Stechwerkzeug (W) verschiebbar auf der Kolbenstange (8) eines pneumatischen oder hydraulischen Arbeitszylinders (7) angeordnet ist und durch eine Feder (28) in Richtung zum Stechwerkzeug (W) beaufschlagt wird.

7. Gerät nach den Ansprüchen 1 bis 6, **dadurch gekennzeichnet**, daß der Auffangbehälter (9) zusammen mit dem Stechwerkzeug (W) an der Kolbenstange (8) befestigt ist.

8. Gerät nach den Ansprüchen 1 bis 7, **dadurch gekennzeichnet**, daß eine Höhenverstellvorrichtung (V) für den Antrieb (A) vorgesehen ist.

9. Gerät nach Anspruch 8, **dadurch gekennzeichnet**, daß die Höhenverstellvorrichtung (V) einen zweiten, im Gehäuse (1) angeordneten Arbeitszylinder (2) aufweist, an dessen Kolbenstange (5) über ein Verbindungsstück (6) der Antrieb (A) befestigt ist.

10. Gerät nach Anspruch 9, **dadurch gekennzeichnet**, daß am Verbindungsstück (6) ein Handgriff (12) angeordnet ist.

11. Gerät nach Anspruch 10, **dadurch gekennzeichnet**, daß getrennte Steuerventile (15, 16) und ein gemeinsamer Versorgungsanschluß (34) für beide Arbeitszylinder (7, 2) vorgesehen sind.

12. Gerät nach wenigstens einem der Ansprüche 1 bis 11, **dadurch gekennzeichnet**, daß der Auffangbehälter (9) und/oder die Ableitung (11) an eine Unterdruckquelle anschließbar ist (sind).
